# EUROPEAN PATENT SPECIFICATION

(11) **EP 2 400 232 B1**
(45) Date of publication and mention of the grant of the patent: **11.10.2017**
(21) Application number: 09840344.7
(22) Date of filing: 19.02.2009
(51) Int. Cl.: F24F 7/08, F24F 12/00, F24F 13/28

(54) **HEAT EXCHANGING VENTILATOR**
WÄRMEAUSTAUSCHLÜFTUNG
VENTILATEUR D'ÉCHANGE DE CHALEUR

(43) Date of publication of application: 28.12.2011
(73) Proprietor: Mitsubishi Electric Corporation, Tokyo 100-8310 (JP)
(72) Inventor: IMAI, Kunio, Nakatsugawa-shi Gifu 508-0041 (JP); AOKI, Hiroki, Tokyo 100-8310 (JP)
(74) Representative: Pfenning, Meinig & Partner mbB
(86) International application number: PCT/JP2009/052937
(87) International publication number: WO 2010/095237

(56) References cited:
- EP-A2- 1 698 836
- WO-A1-2008/129795
- WO-A1-2008/156131
- FR-A1- 2 533 682
- FR-A1- 2 864 607
- JP-A- 2006 284 049
- JP-A- 2006 308 180
- JP-A- 2007 187 408
- US-A1- 2003 177 777

## Description

### TECHNICAL FIELD

The present invention relates to a heat exchange ventilation apparatus that performs ventilation while performing heat exchange between outdoor air and indoor air by a heat exchanger.

### BACKGROUND ART

Conventionally, there is a heat exchange ventilation apparatus that includes an exhaust air passage for exhausting indoor air to the outside of a room and a supply air passage for supplying outdoor air to the inside of a room and performs ventilation while performing heat exchange between an exhaust air flow flowing in the exhaust air passage and a supply air flow flowing in the supply air passage. As such a heat exchange ventilation apparatus, there is proposed one in which a filter for removing dust and insects contained in the supply air flow and a pan that receives dust and insects falling from the filter are provided, for example, in Patent Document 1.

Patent Document 1: Japanese Patent Application Laid-open No. 2003-74936

FR 2 864 607 A1 discloses a heat exchange ventilation apparatus with a box-shaped body casing having an exhaust air passage and a supply air passage. A heat exchanger 15 is arranged at an intersection portion, at which the exhaust air passage and the supply air passage intersect. Angle elements 16 consisting of vertical posts and an intermediate upright piece are fixed on the sidewalls of the casing, extending vertically from the bottom of the casing and supporting the heat exchanger in a sealed way by means of seals received by the intermediate upright piece. Two independent air passages are thereby realized.

### DISCLOSURE OF INVENTION

### PROBLEM TO BE SOLVED BY THE INVENTION

However, in the above-described conventional heat exchange ventilation apparatus, when performing maintenance such as replacement of the filter, first, the pan needs to be detached. If the detached pan is kept in hand, workability is deteriorated, so that there is a problem that the pan, for example, needs to be put in a different place and therefore the maintenance operation is troublesome. Moreover, because the filter is detached after detaching the pan, there is a problem that dust and insects falling from the filter directly fall to make a floor or a desk therearound dirty. Furthermore, there is also a problem that dust and insects falling from the filter directly fall to make clothes of a worker dirty.

The present invention is achieved in view of the above, and has an object to obtain a heat exchange ventilation apparatus capable of improving a maintenance performance and a service performance such as a filter replacement.

### MEANS FOR SOLVING PROBLEM

In order to solve the aforementioned problems and attain the aforementioned object, a heat exchange ventilation apparatus according to one aspect of the present invention is constructed in such a manner as to include: a box-shaped body casing in which an exhaust air passage that exhausts indoor air to an outside of a room and a supply air passage that supplies outdoor air to an inside of a room are formed; a heat exchanger that is arranged at an intersection portion at which the exhaust air passage and the supply air passage intersect and performs heat exchange between an exhaust air flow flowing in the exhaust air passage and a supply air flow flowing in the supply air passage; and a filter holding unit in which a holding frame that holds a filter on an inflow side of the supply air flow of the heat exchanger and a pan that receives a falling object from the filter are integrated [[,]] is attachable and detachable to and from the body casing together with the filter, and includes an isolation portion that isolates the supply air passage from the exhaust air passage, wherein an opening into which the filter holding unit is inserted is formed in a surface facing an inflow surface of the supply air flow in the supply air passage, in the body casing, and the filter holding unit is attached in a direction in which the filter holding unit is in close contact with the inflow surface of the supply air in the heat exchanger by attaching the filter holding unit to the openings.

### EFFECT OF THE INVENTION

According to the present invention, when attaching and detaching a filter, a filter holding unit that includes a pan is also attached and detached, so that falling objects such as dust and insects falling from the filter at the time of maintenance fall on the pan. Therefore, an effect is obtained that the maintenance can be performed safely and cleanly without making a peripheral floor and clothes of a worker dirty.

### BRIEF DESCRIPTION OF DRAWINGS

FIG. 1 is a partial exploded perspective view of a heat exchange ventilation apparatus as viewed from below according to a first embodiment of the present invention.
FIG. 2 is an exploded perspective view of the heat exchange ventilation apparatus.
FIG. 3-1 is a side cross section of the heat exchange ventilation apparatus and is a diagram illustrating an attached state of a filter holding unit.
FIG. 3-2 is a side cross section of the heat exchange ventilation apparatus and is a diagram illustrating a detached state of the filter holding unit.
FIG. 4 is a plan cross-sectional view of the heat exchange ventilation apparatus as viewed from above.
FIG. 5 is a partial exploded perspective view of the heat exchange ventilation apparatus as viewed from above.
FIG. 6-1 is a transverse cross-sectional view for explaining a supply air passage at a portion, in which a heat exchanger is stored, in a body casing.
FIG. 6-2 is a diagram for explaining an exhaust air passage at a portion, in which the heat exchanger is stored, in the body casing.
FIG. 7 is an exploded perspective view of a filter and the filter holding unit.
FIG. 8 is a side-part cross-sectional view of the filter holding unit.

### EXPLANATIONS OF LETTERS OR NUMERALS

- 1: Body casing
- 2: Heat exchanger
- 2a: Supply-air inflow surface
- 2b: Exhaust-air inflow surface
- 2c: Exhaust-air outflow surface
- 2d: Supply-air outflow surface
- 2r, 2s, 2u, 2v: Edge portion
- 3: Supply air blower
- 4: Exhaust air blower
- 5: Box
- 5a: Blower chamber
- 6: Filter holding unit
- 6a: First filter frame (holding frame)
- 6b: Second filter frame (holding frame)
- 6c, 6d, 6f, 6h: Opening
- 6e, 6g: Claw
- 6i: Groove
- 6j, 6m: Rib
- 6n: End portion
- 61: Projection and recess portion
- 6p: Beam
- 6q: Recess portion
- 6r: Rib
- 6t: Tubular portion
- 6s: Beam
- 6u: Pan
- 6v: Flange
- 6w: Filter holding frame (holding frame)
- 6y: Isolation portion
- 7, 9: Filter
- 8: Drain pan
- 8a: Holding portion
- 10: Tab
- 11: Handle
- 12a, 12b: Drain opening
- 13: End
- 14a, 14b: Side plate
- 21: Supply-air suction opening
- 22: Supply-air discharge opening
- 23: Exhaust-air suction opening
- 24: Exhaust-air discharge opening
- 31: Sheet metal molding
- 31a: Top plate
- 31b, 31c: Side plate
- 32: Bottom plate
- 50: Heat exchange ventilation apparatus

### BEST MODE(S) FOR CARRYING OUT THE INVENTION

Exemplary embodiments of a heat exchange ventilation apparatus according to the present invention will be explained below in detail with reference to the drawings. This invention is not limited to this embodiment.

### First Embodiment.

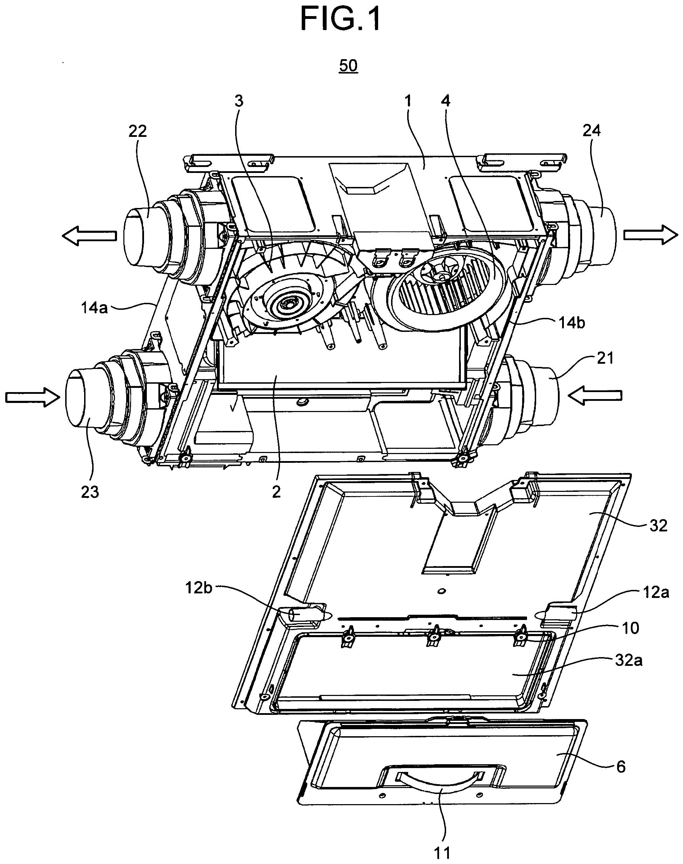

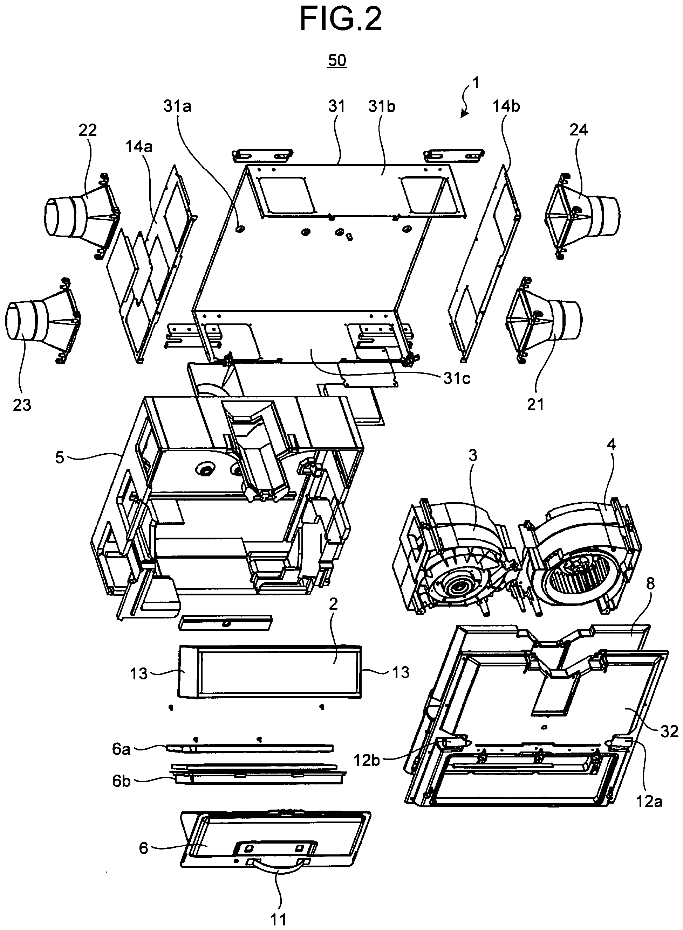

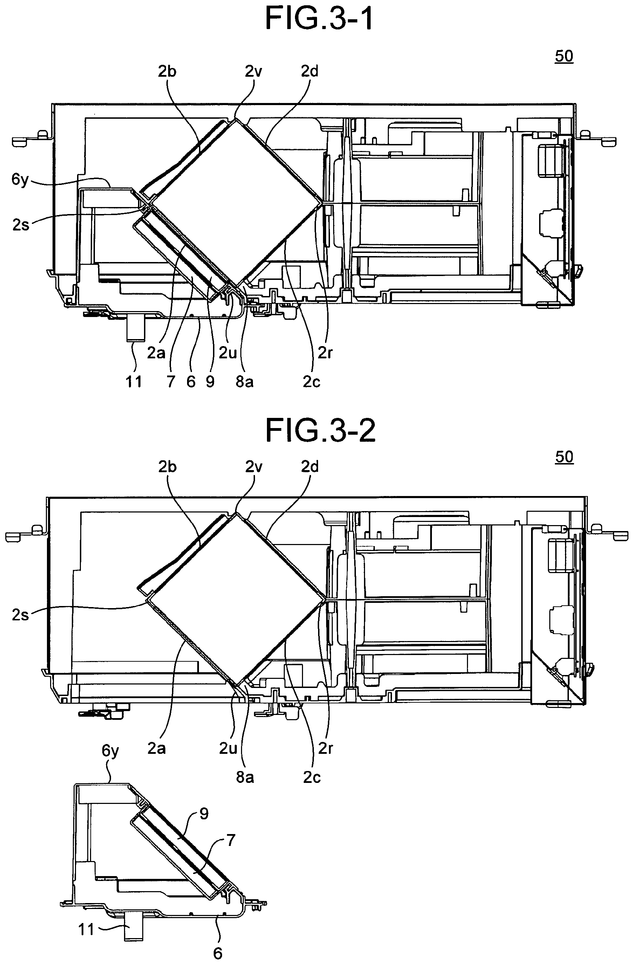

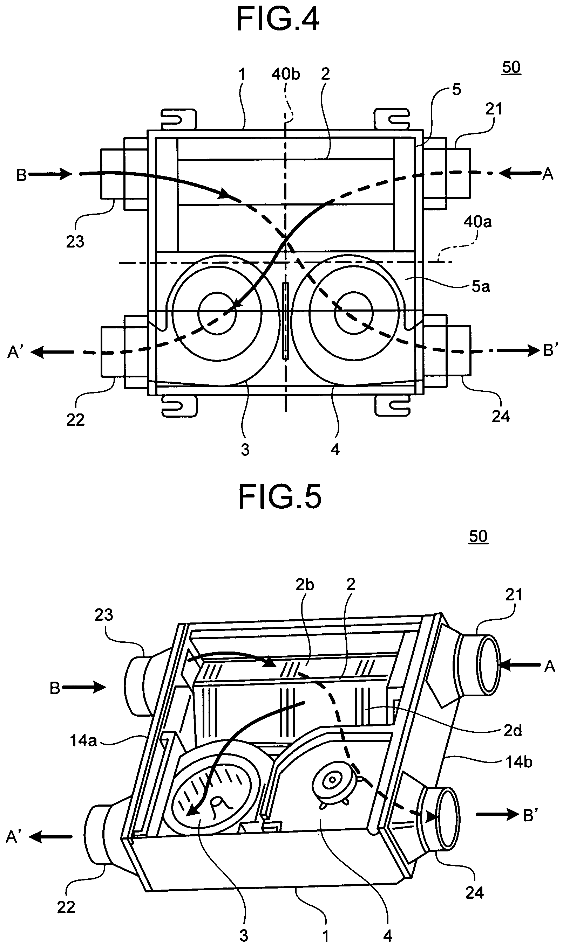

FIG. 1 is a partial exploded perspective view of a heat exchange ventilation apparatus as viewed from below according to the first embodiment of the present invention. FIG. 2 is an exploded perspective view of the heat exchange ventilation apparatus shown in FIG. 1. FIG. 3-1 is a side cross section of the heat exchange ventilation apparatus shown in FIG. 1 and is a diagram illustrating an attached state of a filter holding unit. FIG. 3-2 is a side cross section of the heat exchange ventilation apparatus shown in FIG. 1 and is a diagram illustrating a detached state of the filter holding unit. FIG. 4 is a plan cross-sectional view of the heat exchange ventilation apparatus shown in FIG. 1 as viewed from above. FIG. 5 is a partial exploded perspective view of the heat exchange ventilation apparatus as viewed from above.

A heat exchange ventilation apparatus 50 is schematically configured to include a body casing 1, a box 5, and a filter holding unit 6. The body casing 1 is formed into a hexahedral box shape. The body casing 1 is configured to include a sheet metal molding 31, a bottom plate 32, and side plates 14a and 14b. The sheet metal molding 31 consists of three sides of a top plate 31a and a pair of side plates 31b and 31c formed by bending a pair of opposite sides of this top plate 31a to have a C-shaped cross section. The bottom plate 32 is provided to face the top plate 31a. The side plates 14a and 14b cover both openings of a tubular body composed of the sheet metal molding 31 and the bottom plate 32. In this manner, the body casing 1 consists of six sides of the top plate 31a, the bottom plate 32, and the side plates 31b, 31c, 14a, and 14b. A drain pan 8 is fit in the bottom plate 32. For the bottom plate 32, for example, a resin molding is used.

In the side plates 14a and 14b, openings for suctioning and discharging air in the body casing 1 are formed. A resin-molded supply-air discharge opening 22 and a resin-molded exhaust-air suction opening 23 are attached to the openings formed in the side plate 14a. A resin-molded supply-air suction opening 21 and a resin-molded exhaust-air discharge opening 24 are attached to the openings formed in the side plate 14b. These openings such as the supply-air discharge opening 22 function as a connection opening to which a duct is connected.

The box 5 stores therein a stacked-type heat exchanger 2, a supply air blower 3, and an exhaust air blower 4 and is attached to the inside of the body casing 1. For example, a styrol molding is used for the box 5. In the box 5, the heat exchanger 2 is detachably incorporated. As shown in FIG. 3-1, the heat exchanger 2 is incorporated in the box 5 in such a manner that both ends 13 thereof are laid sideways, and an exhaust-air inflow surface 2b that is a surface of an inflow side of an exhaust air flow is directed to an upper surface direction of the body casing 1 and a supply-air inflow surface 2a that is a surface of an inflow side of a supply air flow is directed to a lower surface direction of the body casing 1.

In the heat exchanger 2, an exhaust-air outflow surface 2c that is a surface of an outflow side of an exhaust air flow is directed to a lower surface direction of the body casing 1. Moreover, in the heat exchanger 2, a supply-air outflow surface 2d that is an outflow surface of a supply air flow is directed to an upper surface direction of the body casing 1. On the supply-air inflow surface 2a, a filter 7 for removing dust and the like contained in a supply air flow is provided. The filter 7 is held on the supply-air inflow surface 2a side by a filter holding frame (holding frame) 6w to be described later.

Detailed explanation of the configuration and the like of the heat exchanger 2 is omitted, however, in the heat exchanger 2, a first passage (not shown) that communicates between the supply-air inflow surface 2a and the supply-air outflow surface 2d is formed and a second passage (not shown) that communicates between the exhaust-air inflow surface 2b and the exhaust-air outflow surface 2c is formed. The first passage and the second passage are independent from each other and heat exchange is performed between air passing through the first passage and air passing through second passage.

As shown in FIG. 3-1, the heat exchanger 2 is such that an edge portion 2r on the side of the supply air blower 3 and the exhaust air blower 4 is attached to be in contact with each of the blowers 3 and 4 in an airtight manner. An edge portion 2s that is an opposing corner of the edge portion 2r is attached to be in contact with the filter holding unit 6 in an airtight manner. An edge portion 2u in the lower portion is attached in an airtight manner while being supported by a V-shaped holding portion 8a of the drain pan 8. An edge portion 2v in the upper portion that is an opposing corner of the edge portion 2u is attached to the top plate of the body casing 1 in an airtight manner.

As shown in FIG. 4, the heat exchanger 2 is arranged on one side of a center line 40a in the box 5. On the other side of the center line 40a, a blower chamber 5a in which each of the blowers 3 and 4 is incorporated is configured. In the blower chamber 5a, the exhaust air blower 4 is incorporated on one side of a center line 40b and the supply air blower 3 is incorporated on the other side. A blower with the same shape as the exhaust air blower 4 is invertedly incorporated as the supply air blower 3.

The drain pan 8 is provided in the lower portion of the body casing 1 and collects drainage generated from the heat exchanger 2. The drain pan 8 covers up to the edge portion 2u in the lower portion of the heat exchanger 2 from the lower side portion of the exhaust air blower 4 and the supply air blower 3. Drain openings 12a and 12b discharge drainage from the drain pan 8 to the outside. For example, a styrol molding is used for the drain pan 8. The filter holding unit 6 is inserted into the body casing 1 from an opening 32a provided in the drain pan 8 and the bottom plate 32.

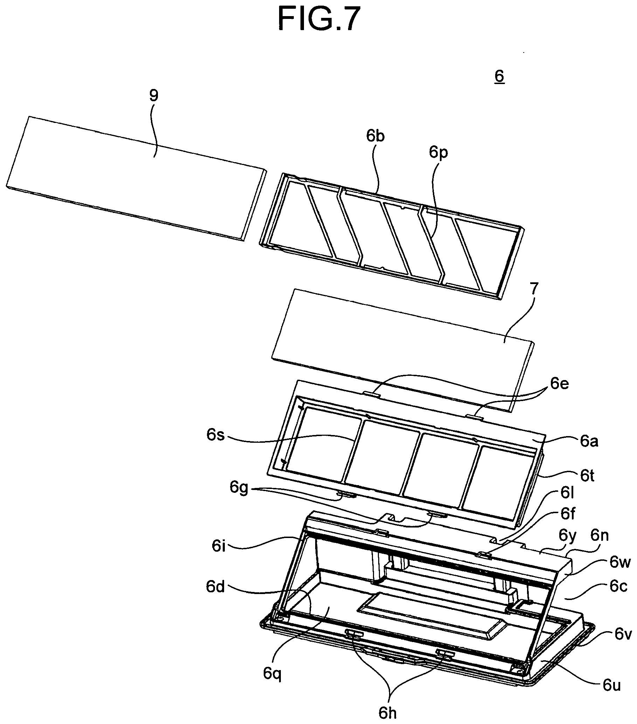

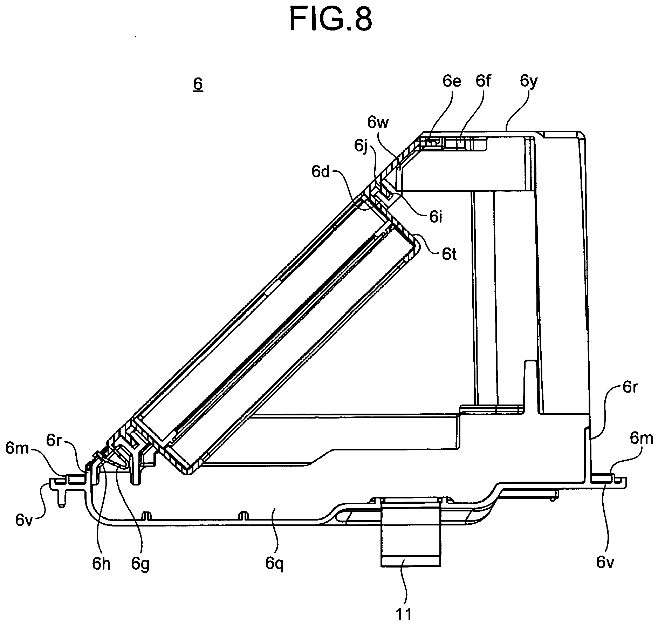

FIG. 7 is an exploded perspective view of the filter 7 and the filter holding unit 6. FIG. 8 is a side-part cross-sectional view of the filter holding unit 6. The filter holding unit 6 is configured to include a pan 6u, the filter holding frame 6w, a first filter frame (holding frame) 6a, and a second filter frame (holding frame) 6b.

The pan 6u forms part of the outer shell of the main body of the heat exchange ventilation apparatus 50, and receives dust, insects, dew condensation water, and the like adhered to the filter 7. The filter holding frame 6w is formed on the pan 6u and has a function of supporting the first filter frame 6a, and also holding the filter 7. The first filter frame 6a is supported by the filter holding frame 6w in a state of storing the filter 7. In a state where the first filter frame 6a is supported by the filter holding frame 6w, the surface of the filter 7 into which a supply air flow flows is directed downward. The second filter frame 6b presses and fixes the filter 7 that is in a state of being stored in the first filter frame 6a. As shown in FIG. 8, in a state where the filter 7, the first filter frame 6a, and the filter holding frame 6w are assembled, the pan 6u is arranged at a position at which falling objects from the filter 7 are received.

The pan 6u seals the opening 32a of the bottom plate 32. The pan 6u includes a flange 6v for fixing the pan 6u with the opening 32a sealed, a rib 6r formed inside the flange 6v, and a recess portion 6q formed inside the rib 6r. The pan 6u receives falling objects (dust and insects) from the filter 7 and prevents leakage of water and the like.

Moreover, an inside plane area surrounded by the rib 6r is larger than a horizontal projected area of an opening 6d of the filter holding frame 6w, so that falling objects from the filter 7 do not fall outside the rib 6r. Moreover, the filter holding frame 6w is integrally molded with the flange 6v to form an angle of approximately 45° with respect to the bottom surface of the recess portion 6q of the pan 6u. The space formed by the pan 6u and the filter holding frame 6w forms part of the supply air passage. It is applicable that the filter holding frame 6w formed separately from the pan 6u is fixed to the flange 6v by fastening with a screw or the like.

A rib 6m for preventing air leakage from the supply air passage is provided over the entire periphery of the flange 6v of the pan 6u. Moreover, tabs 10 for fixing the pan 6u to the opening 32a are provided on the bottom plate 32. Furthermore, a handle 11 is provided on the pan 6u for facilitating handling of the filter holding unit 6 at the time of the maintenance.

The filter holding frame 6w has the opening 6d for attaching the first filter frame 6a, and a groove 6i in which a rib 6j of the first filter frame 6a is fit is formed around the opening 6d. Moreover, an isolation portion 6y that isolates the exhaust air passage from the supply air passage is formed on the filter holding frame 6w. The isolation portion 6y is provided on the opposite side to the connection side with the flange 6v with respect to the filter holding frame 6w to be approximately parallel to the flange 6v. Moreover, openings 6f with which claws 6e of the first filter frame 6a are engaged are provided at two locations on the isolation portion 6y side of the filter holding frame 6w. Openings 6h with which claws 6g of the first filter frame 6a are engaged are provided at two locations on the flange 6v side of the filter holding frame 6w. Moreover, a projection and recess portion 61 to be engaged with a projection and recess portion of the box 5 when being incorporated in the box 5 is formed on an end portion 6n on the opposite side to the opening 6d in the isolation portion 6y. The projection and recess portion 61 is engaged with the projection and recess portion of the box 5, so that the filter holding unit 6 is positioned with respect to the box 5.

The first filter frame 6a includes a tubular portion 6t and beams 6s. The tubular portion 6t has an opening in which the filter 7 is stored and has a rectangular shape. The tubular portion 6t is inserted into the opening 6d of the filter holding frame 6w. A plurality of the beams 6s is formed inside the opening of the tubular portion 6t. The beams 6s support the filter 7 so that the filter 7 stored in the tubular portion 6t does not drop. The claws 6e and 6g for fixing to the filter holding frame 6w are each provided at two locations around the first filter frame 6a. The shape of the claw 6e is a shape formed by bending a tip end of a flat plate at 45°. The claw 6g is bent into a V shape to have a spring function. The tubular portion 6t is formed to have a depth with which a plurality of filters can be stacked and stored therein. Therefore, a plurality of types of the filters 7 can be used in combination in accordance with the usage. In the first embodiment, a filter 9 is stacked and stored in the tubular portion 6t in addition to the filter 7.

The rib 6j that fits in the groove 6i of the filter holding frame 6w is provided on the outer periphery of the tubular portion 6t, and the rib 6j prevents air leakage from between the opening 6d of the filter holding frame 6w and the first filter frame 6a at the time of using the heat exchange ventilation apparatus 50. Moreover, in a state where the filter holding unit 6 is attached to the box 5, the peripheral portion of the opening of the first filter frame 6a is in a state of being in close contact with and pressed against the supply-air inflow surface 2a of the heat exchanger 2. Therefore, air is prevented from leaking from a close contact portion formed by the peripheral portion of the opening of the first filter frame 6a and the supply-air inflow surface 2a of the heat exchanger 2.

The second filter frame 6b is formed into a rectangular shape to be stored in the opening of the first filter frame 6a and includes a plurality of beams 6p. The filter 7 stored in the first filter frame 6a is fixed by the beams 6p formed in the second filter frame 6b and the beams 6s formed in the first filter frame 6a. In a state where the second filter frame 6b fixes the filter 7, the filter 9 is further stored in the tubular portion 6t. The filter 9 is fixed by being sandwiched between the beams 6p of the second filter frame 6b and the supply-air inflow surface 2a of the heat exchanger 2 (see FIG. 3-1).

Fixing of the first filter frame 6a and the second filter frame 6b to the filter holding unit 6 is performed by attaching the second filter frame 6b to the first filter frame 6a, inserting the claws 6e provided on the first filter frame 6a into the openings 6f of the filter holding unit 6, and inserting the opposing claws 6g into the openings 6h in the filter holding unit 6.

The material of the filters 7 and 9 is formed of nonwoven fabric and is formed into a rectangular shape with a size capable of being stored in the first filter frame 6a. The type of the filters 7 and 9 can be changed depending on the use and purpose thereof. For example, a dust collecting filter for collecting dust can be used as the filter 7 and a deodorizing filter for deodorization can be used as the filter 9.

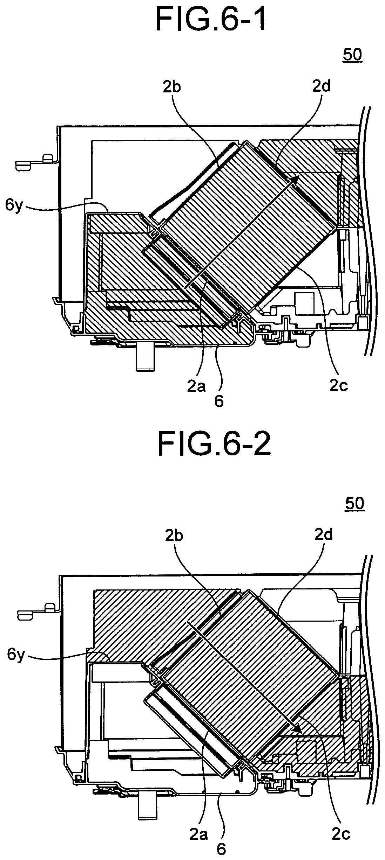

With the above described configuration, the supply air passage that supplies outdoor air to the inside of a room and the exhaust air passage that exhausts indoor air to the outside of a room are formed in the body casing 1. As shown in FIG. 4, in the body casing 1, the supply air passage along an arrow A-A' is formed. In the similar manner, the exhaust air passage along an arrow B-B' is formed. In the body casing 1, a portion in which the supply air blower 3 is stored forms a part of the supply air passage. In the body casing 1, a portion in which the exhaust air blower 4 is stored forms a part of the exhaust air passage. FIG. 6-1 is a transverse cross-sectional view for explaining the supply air passage at a portion, in which the heat exchanger 2 is stored, in the body casing 1. The region covered by hatched lines in FIG. 6-1 forms a part of the supply air passage. A supply air flow forms a flow (flow passing through the first passage) from the supply-air inflow surface 2a to the supply-air outflow surface 2d. FIG. 6-2 is a diagram for explaining the exhaust air passage at a portion, in which the heat exchanger 2 is stored, in the body casing 1. The region covered by hatched lines in FIG. 6-2 forms a part of the exhaust air passage. An exhaust air flow forms a flow (flow passing through the second passage) from the exhaust-air inflow surface 2b to the exhaust-air outflow surface 2c. As shown in FIG. 6-1 and FIG. 6-2, the isolation portion 6y isolates the supply air passage from the exhaust air passage in a state where the filter holding unit 6 is attached.

Next, operation and maintenance of the heat exchange ventilation apparatus 50 are explained. When the heat exchange ventilation apparatus 50 is operated, the exhaust air flow along the arrow B-B' is formed in the exhaust air passage by the exhaust air blower 4. Therefore, indoor air is suctioned from the exhaust-air suction opening 23, passes through the heat exchanger 2, and is discharged from the exhaust-air discharge opening 24. The air discharged from the exhaust-air discharge opening 24 is, for example, conveyed through a duct and is discharged to the outside of a room.

Moreover, the supply air flow along the arrow A-A' is formed in the supply air passage by the supply air blower 3. Therefore, outdoor air is suctioned into the supply-air suction opening 21, passes through the heat exchanger 2, and is discharged from the supply-air discharge opening 22. The air discharged from the supply-air discharge opening 22 is, for example, conveyed through a duct and is supplied to the inside of a room. The supply air flow, when passing through the heat exchanger 2, passes through the filter 7. Thus, dust contained in the supply air flow is removed by the filter 7.

Heat contained in the exhaust air flow is accumulated in the heat exchanger 2 when passing through the heat exchanger 2. The heat accumulated in the heat exchanger 2 is collected into the supply air flow passing through the heat exchanger 2. Therefore, the temperature change in a room due to ventilation can be suppressed and load on an air conditioner (not shown) and the like provided separately from the heat exchange ventilation apparatus 50 can be reduced.

When performing maintenance of the heat exchange ventilation apparatus 50, the tabs 10 fixed to the body casing 1 are released and the filter holding unit 6 is drawn in a vertical direction (downward) while gripping the handle 11. The first filter frame 6a and the second filter frame 6b are detached from the drawn filter holding unit 6, and the filter 7 and the filter 9 are taken out to be cleaned or replaced. Dust, insects, and water fell onto the pan 6u of the filter holding unit 6 are discarded from openings 6c and 6d provided in the filter holding unit 6.

In this manner, the filter holding unit 6 is configured such that the pan 6u and the filter holding frame 6w are integrated, so that the filter 7 can be detached at the same time by detaching the filter holding unit 6. Moreover, the handle 11 is provided, so that the filter holding unit 6 is easy to bring and an operation is easy to perform when performing maintenance of the heat exchange ventilation apparatus 50 that is often provided on a ceiling and the like.

Moreover, even if dust, insects, and dew condensation water adhered to the filter 7 fall when detaching the filter holding unit 6, they can be received by the pan 6u. Thus, maintenance can be performed safely and cleanly without making a peripheral floor dirty and making clothes of a worker dirty.

Furthermore, the pan 6u and the filter holding frame 6w are integrated, so that the number of components can be reduced and thus the man-hours of work at the time of the maintenance can be reduced. Moreover, a plurality of filters can be stored in the tubular portion 6t of the first filter frame 6a, so that filters can be selected and combined in accordance with the usage.

The first filter frame 6a is configured to be attached to the filter holding frame 6w, so that attachment and handling of the filter 7 become easy. Moreover, the state of the filter 7 is easily checked, so that maintenance and cleaning operation are easily performed.

Moreover, because the filter holding unit 6 includes the isolation portion 6y, cleaning of the exhaust air passage becomes easy by detaching the filter holding unit 6. In other words, provision of the isolation portion 6y to the filter holding unit 6 improves not only the maintenance performance on the supply air side of the heat exchange ventilation apparatus 50 but also the maintenance performance on the exhaust air side. If the maintenance performance on the exhaust air side is improved, a filter can be also provided to the exhaust-air inflow surface 2b of the heat exchanger 2. If a filter is provided to the exhaust-air inflow surface 2b of the heat exchanger 2, degradation of performance of the heat exchanger 2 due to adhesion of dirt can be suppressed and the life of the heat exchanger 2 can be prolonged. Moreover, attachment and detachment of a filter provided to the exhaust-air inflow surface 2b of the heat exchanger 2 become easy. Furthermore, the number of components can be reduced compared with the case of providing the isolation portion separately from the filter holding unit 6, enabling to suppress the manufacturing cost.

### INDUSTRIAL APPLICABILITY

As described above, the heat exchange ventilation apparatus according to the present invention is useful for ventilation in a room, and is particularly suitable for a heat exchange ventilation apparatus that removes dust contained in a supply air flow and an exhaust air flow by a filter.

## Claims

1. A heat exchange ventilation apparatus comprising:
a box-shaped body casing (1) in which an exhaust air passage that exhausts indoor air to an outside of a room and a supply air passage that supplies outdoor air to an inside of a room are formed;
a heat exchanger (2) that is arranged at an intersection portion at which the exhaust air passage and the supply air passage intersect and performs heat exchange between an exhaust air flow flowing in the exhaust air passage and a supply air flow flowing in the supply air passage; and
a filter holding unit (6) in which a holding frame (6w) that holds a filter (7) on an inflow side of the supply air flow of the heat exchanger (2) and a pan (6u) that receives a falling object from the filter (7) are integrated is attachable and detachable to and from the body casing (1) together with the filter (7), and includes an isolation portion (6y) that isolates the supply air passage from the exhaust air passage, wherein
an opening into which the filter holding unit (6) is inserted is formed in a surface facing an inflow surface (2a) of the supply air flow in the supply air passage, in the body casing (1), and
the filter holding unit (6) is attached in a direction in which the filter holding unit (6) is in close contact with the inflow surface (2a) of the supply air in the heat exchanger (2) by attaching the filter holding unit (6) to the openings.

2. The heat exchange ventilation according to claim 1, wherein
the filter (7) is held so that an inflow side of the supply air flow is directed downward in an attached state of the filter holding unit (6), and
the pan (6u) is arranged at a position at which a falling object from the inflow side of the supply air flow in the filter (7) is received.

3. The heat exchange ventilation according to claim 1 or 2, wherein the holding frame (6w) is capable of holding a plurality of filters (7, 9) in a stacked manner.

## Patentansprüche

1. Wärmeaustauschlüftungsvorrichtung, umfassend:
ein kastenförmiges Körpergehäuse (1), in welchem ein Abluftdurchlass, der Innenluft zu einer Außenseite eines Raums abgibt, und ein Zuluftdurchlass, der Außenluft zu einer Innenseite eines Raumes zuführt, ausgebildet sind;
einen Wärmetauscher (2), der an einem Überschneidungsabschnitt angeordnet ist, an welchem sich der Abluftdurchlass und der Zuluftdurchlass überschneiden, und Wärmeaustausch zwischen einem Abluftstrom, der im Abluftdurchlass strömt, und einem Zuluftstrom, der im Zuluftdurchlass strömt, durchführt; und
eine Filterhalteeinheit (6), in welcher ein Halterahmen (6w), der einen Filter (7) auf einer Einströmungsseite des Zuluftstroms des Wärmetauschers (2) hält, und eine Pfanne (6u), die ein fallendes Objekt vom Filter (7) aufnimmt, integriert sind, am Körpergehäuse (1) zusammen mit dem Filter (7) befestigbar und lösbar ist, und einen Isolationsabschnitt (6y) enthält, der den Zuluftdurchlass vom Abluftdurchlass isoliert, wobei
eine Öffnung, in welche die Filterhalteeinheit (6) eingesetzt ist, in einer Oberfläche, die einer Einströmungsoberfläche (2a) des Zuluftstroms im Zuluftdurchlass zugewandt ist, im Körpergehäuse (1), ausgebildet ist, und
die Filterhalteeinheit (6) in einer Richtung befestigt ist, in welcher die Filterhalteeinheit (6) mit der Einströmungsoberfläche (2a) der Zuluft im Wärmetauscher (2) in engem Kontakt ist, indem die Filterhalteeinheit (6) an den Öffnungen befestigt wird.

2. Wärmeaustauschlüftung nach Anspruch 1, wobei
der Filter (7) gehalten wird, so dass eine Einströmungsseite des Zuluftstroms in einem befestigten Zustand der Filterhalteeinheit (6) nach unten gerichtet ist, und
die Pfanne (6u) an einer Position angeordnet ist, an welcher ein fallendes Objekt von der Einströmungsseite des Zuluftstroms im Filter (7) aufgenommen wird.

3. Wärmeaustauschlüftung nach Anspruch 1 oder 2, wobei der Halterahmen (6w) in der Lage ist, eine Vielzahl von Filtern (7, 9) in einer gestapelten Weise zu halten.

## Revendications

1. Appareil de ventilation d'échange de chaleur comprenant :
un boîtier de corps en forme de boîte (1) dans lequel un passage d'air d'échappement qui évacue l'air intérieur à l'extérieur d'une pièce et un passage d'air d'alimentation qui fournit l'air extérieur à l'intérieur d'une pièce, sont formés ;
un échangeur de chaleur (2) qui est agencé au niveau d'une partie d'intersection à laquelle le passage d'air d'échappement et le passage d'air d'alimentation se coupent et réalise l'échange de chaleur entre un écoulement d'air d'échappement s'écoulant dans le passage d'air d'échappement et un écoulement d'air d'alimentation s'écoulant dans le passage d'air d'alimentation ; et
une unité de support de filtre (6) dans laquelle un bâti de support (6w) qui supporte un filtre (7) du côté de l'écoulement d'entrée de l'écoulement d'air d'alimentation de l'échangeur de chaleur (2) et un bac (6u) qui reçoit un objet tombant du filtre (7) sont intégrés, peut être fixée et détachée du boîtier de corps (1) conjointement avec le filtre (7), et comprend une partie d'isolation (6y) qui isole le passage d'air d'alimentation du passage d'air d'échappement, dans lequel :
une ouverture dans laquelle l'unité de support de filtre (6) est insérée, est formée sur une surface faisant face à une surface d'écoulement d'entrée (2a) de l'écoulement d'air d'alimentation dans le passage d'air d'alimentation, dans le boîtier de corps (1), et
l'unité de support de filtre (6) est fixée dans une direction dans laquelle l'unité de support de filtre (6) est en contact immédiat avec la surface d'écoulement d'entrée (2a) de l'air d'alimentation dans l'échangeur de chaleur (2) en fixant l'unité de support de filtre (6) sur les ouvertures.

2. Ventilation d'échange de chaleur selon la revendication 1, dans laquelle :
le filtre (7) est supporté de sorte qu'un côté d'écoulement d'entrée de l'écoulement d'air d'alimentation est dirigé vers le bas dans un état fixé de l'unité de support de filtre (6), et
le bac (6u) est agencé dans une position dans laquelle un objet tombant du côté de l'écoulement d'entrée de l'écoulement d'air d'alimentation dans le filtre (7) est reçu.

3. Ventilation d'échange de chaleur selon la revendication 1 ou 2, dans laquelle le bâti de support (6w) peut supporter une pluralité de filtres (7, 8) par empilement.
